# EUROPEAN PATENT APPLICATION

(11) **EP 4 539 211 A1**
(43) Date of publication of application: **16.04.2025**
(21) Application number: 24797390.2
(22) Date of filing: 24.04.2024
(51) Int. Cl.: H01M 10/6568, H01M 10/613, H01M 50/204

(54) **BATTERY MODULE**

(30) Priority: 25.04.2023 KR 20230053926
(71) Applicant: LG Energy Solution, Ltd., Seoul 07335 (KR)
(72) Inventor: JUNG, Min Yong, Daejeon 34122 (KR); CHOI, Bum, Daejeon 34122 (KR)
(74) Representative: Goddar, Heinz J.
(86) International application number: PCT/KR2024/005510
(87) International publication number: WO 2024/225735

(57) **Abstract**

A battery module according to one example of the present invention comprises a battery cell, a case part having an accommodating space, in which the battery cell is accommodated, and a first wall portion and a second wall portion each surrounding the accommodating space, and a cooling water inlet part having an inlet storage portion, in which cooling water flowing into the first wall portion is accommodated, and provided so that the cooling water in the inlet storage portion flows into the accommodating space through a plurality of branch points.

## Description

### Technical Field

The present invention relates to a battery module, and more specifically, relates to a battery module in which cooling water can be uniformly spread inside the battery module and a branched cooling channel for cooling water is provided in the battery module itself.

This application claims the benefit of priority based on Korean Patent Application No. 10-2023-0053926 dated April 25, 2023, the disclosure of which is incorporated herein by reference in its entirety.

### Background Art

As eco-friendly vehicles, electric vehicles, hybrid vehicles, and plug-in hybrid vehicles to which electric motors generating driving force using electrical energy are applied instead of engines generating driving force by burning existing fossil fuels are released around the world.

Among eco-friendly vehicles using this electrical energy, electric vehicles and plug-in hybrid vehicles receive power from an external charging facility connected to a grid to charge batteries provided in the vehicles, and produce kinetic energy required for vehicle driving using the charged power of the batteries.

The batteries used in these eco-friendly vehicles require high output power, and thus generate a large amount of heat, where to improve battery performance and lifespan, by efficiently discharging the heat generated from the battery, it is very important to prevent the battery from overheating.

Conventionally, an air-cooling method, or a water-cooling method, and the like is known as a cooling method for discharging heat from the battery. Here, a direct water-cooling method is a method of directly impregnating battery cells with cooling water to discharge the heat of the battery cell directly into the cooling water.

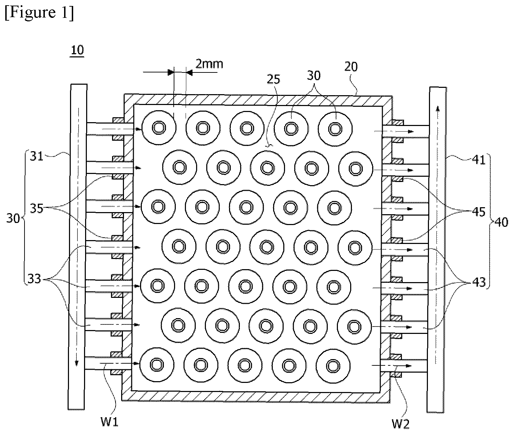

Figure 1 is a schematic diagram for explaining a cooling structure of a conventional battery module.

Referring to Figure 1, the battery module (10) comprises a module frame (20), a plurality of battery cells (30), a cooling water inlet line (30), and a cooling water outlet line (40).

The plurality of battery cells (30) is disposed to be spaced apart from each other so that a gap between adjacent battery cells (30) is within a range of approximately 2mm or less. Since the gap between battery cells (30) is narrow, there is a need for a method of optimizing flow of cooling water (W1) to improve a cooling efficiency.

The module frame (20) is provided so that the cooling water (W1) enables fluid movement therein. The plurality of battery cells (30) is disposed to be spaced apart from each other in the internal space (25) of the module frame (20). To improve the cooling efficiency, the conventional battery module (10) needs to secure as many cooling ports as possible. Hereinafter, the cooling ports are separately designated as inlet ports (33) and outlet ports (43) depending on the installation location.

The cooling water inlet line (30) is provided so that the cooling water (W1) flows into the module frame (20), and the cooling water inlet line (30) comprises a first pipe (31), a plurality of inlet ports (33), and a plurality of first support ribs (35). The first pipe (31) branches into several forks to be coupled to each inlet port (33).

Each inlet port (33) is coupled to the outside of the module frame (20) to enable fluid movement with the interior space (25) of the module frame (20). Each inlet port (33) is supported on the module frame (20) by each first support rib (35).

The conventional battery module (10) implements a cooling water inlet line (30), wherein a plurality of inlet ports (33), a plurality of first support ribs (35), and many various components such as a sealing component sealing each inlet port (33) to a module frame (20) and a coupling component used to individually couple each inlet port (33) to a first pipe (31) are required.

In addition, the cooling water outlet line (40) is provided so that the heat-exchanged cooling water (W2) is discharged from the module frame (20), and the cooling water outlet line (40) comprises a second pipe (41), a plurality of outlet ports (43), and a plurality of second support ribs (45). The second pipe (41) branches into several forks to be coupled to each outlet port (43).

Each outlet port (43) is coupled to the outside of the module frame (20) to enable fluid movement with the internal space of the module frame (20). Each outlet port (43) is supported on the module frame (20) by each second support rib (45).

The conventional battery module (10) implements a cooling water outlet line (40), wherein a plurality of outlet ports (43), a plurality of second support ribs (45), and many various components such as a sealing component sealing each outlet port (43) to a module frame (20) and a coupling component used to individually couple each outlet port (43) to a second pipe (41) are required.

In this instance, as the component types and numbers increase, a process of assembling the cooling water inlet line (30) and the cooling water outlet line (40) to the module frame (20) becomes more complicated. Furthermore, the production cost of the battery module (10) also increases.

In addition, as the volume and weight of all components constituting the battery module (10) increase, there is a problem that an energy density value decreases.

### Disclosure

### Technical Problem

The present invention is intended to provide a battery module in which cooling water can be uniformly spread inside the battery module and a branch cooling channel for cooling water is provided in the battery module itself.

In addition, the present invention is intended to provide a battery module capable of improving an energy density of the battery module by simplifying a cooling line structure in the battery module and reducing a volume and a weight of the battery module.

### Technical Solution

In order to solve the above-described problems, a battery module according to one example of the present invention comprises a battery cell, a case part having an accommodating space, in which the battery cell is accommodated, and a first wall portion and a second wall portion each surrounding the accommodating space, and a cooling water inlet part having an inlet storage portion, in which cooling water flowing into the first wall portion is accommodated, and provided so that the cooling water in the inlet storage portion flows into the accommodating space through a plurality of branch points.

In addition, a plurality of the battery cells may be provided, and the battery module may comprise a plurality of battery cells, a case part having an accommodating space, in which the plurality of battery cells is accommodated, and a first wall portion and a second wall portion each surrounding the accommodating space, and a cooling water inlet part having an inlet storage portion, in which the cooling water flowing into the first wall portion is accommodated, and provided so that the cooling water in the inlet storage portion flows into the accommodating space through a plurality of branch points.

Also, the first wall portion may comprise a first inner wall surrounding the accommodating space, and a first outer wall provided to surround the first inner wall.

In addition, the inlet storage portion may be provided between the first outer wall and the first inner wall.

Furthermore, the cooling water inlet part may comprise a plurality of cooling water inlet openings provided in the first inner wall and guiding the flow of the cooling water so that the cooling water stored in the inlet storage portion flows into the accommodating space at the plurality of branch points.

Also, the cooling water inlet part may comprise a first inlet port provided in the first outer wall and in which the cooling water flows into the inlet storage portion, and a first inlet pipe the first inlet port provided to be connectable to the first inlet port and providing the cooling water to the first inlet port.

In addition, the plurality of cooling water inlet openings may be provided apart at predetermined intervals along the inlet storage portion, and provided so that the opening size becomes larger as the openings are farther away from the first inlet port.

Also, the plurality of cooling water inlet openings may be located at the upper end of the inlet storage portion so that in the inlet storage portion, the cooling water is stored to a predetermined level, and then flows into the accommodating space.

In addition, the inlet storage portion may comprise an inlet storage groove provided in the first wall portion, the first inlet port may be connected to the bottom of the inlet storage groove, and the plurality of cooling water inlet openings may be located at the top of the inlet storage groove.

Furthermore, the case part may comprise a lower case including the accommodating space, and the first wall portion having the inlet storage portion, and an upper case mounted on the lower case to cover the accommodating space and the inlet storage portion. In addition, the plurality of cooling water inlet openings may be located between the upper case and the first inner wall.

Also, the cooling water inlet part may comprise a second inlet port spaced apart from the first inlet port and provided in the first outer wall to enable fluid movement with the inlet storage portion, and a second inlet pipe provided to be connectable to the second inlet port and providing the cooling water to the second inlet port.

In addition, the case part may comprise a cooling water outlet part provided in the second wall portion of the case part such that the cooling water in the accommodating space is discharged from the accommodating space through the plurality of branch points.

Furthermore, the second wall portion may comprise a second inner wall disposed to face the first inner wall of the case part and surrounding the accommodating space, and a second outer wall provided to surround the second inner wall.

Also, the cooling water outlet part may comprise an outlet storage portion provided between the second outer wall and the second inner wall, and a plurality of cooling water outlet openings provided in the second inner wall and guiding the flow of the cooling water so that the cooling water in the accommodating space flows into the outlet storage portion at the plurality of branch points.

In addition, the cooling water outlet part may comprise a first outlet port provided in the second outer wall to enable fluid movement with the outlet storage portion, and a first outlet pipe provided to be connectable to the first outlet port and through which the cooling water discharged from the first outlet port flows.

Furthermore, the plurality of cooling water outlet openings may be provided apart at predetermined intervals along the outlet storage portion, and provided so that the opening size becomes larger as the openings are farther away from the first outlet port.

Also, the plurality of cooling water outlet openings may be located at the upper end of the outlet storage portion so that the cooling water in the accommodating space is stored to a predetermined level, and then discharged to the outlet storage portion.

In addition, the outlet storage portion may comprise an outlet storage groove provided in the second wall portion, the first outlet port may be connected to the bottom of the outlet storage groove, and the plurality of cooling water outlet openings may be located at the top of the outlet storage groove.

Furthermore, the cooling water outlet part may comprise a second outlet port spaced apart from the first outlet port and provided in the second outer wall to enable fluid movement with the outlet storage portion, and a second outlet pipe provided to be connectable to the second outlet port and through which the cooling water discharged from the second outlet port flows.

In addition, a battery module related to another example of the present invention comprises a battery cell, a case part having an accommodating space, in which the battery cell is accommodated, and a first wall portion and a second wall portion each surrounding the accommodating space, and a cooling water inlet part having an inlet storge portion, in which the cooling water flowing into the first wall portion is accommodated, and a plurality of cooling water openings guiding the flow of the cooling water so that the cooling water stored in the inlet storage portion flows into the accommodating space at the plurality of branch points.

### Advantageous Effects

As discussed above, the battery module related to at least one example of the present invention has the following effects.

The cooling water inlet part is formed in the first wall portion of the case part.

Also, the cooling water can be supplied to the accommodating space in several forks through the plurality of cooling water inlet openings provided in the inside of the first wall portion, and the cooling water can be uniformly supplied to the entire region of the accommodating space. Accordingly, it is possible to improve the cooling efficiency.

In addition, the cooling water outlet part is formed in the second wall portion facing the first wall portion. At this time, the cooling water in the accommodating space can be discharged in several forks through the plurality of cooling water outlet openings provided in the inside of the second wall portion, thereby improving the cooling efficiency.

Furthermore, the structure of the cooling line can be simplified by reducing the numbers of the inlet ports and outlet ports connected from the outside of the case part.

Also, it is possible to reduce the volume and weight of all components constituting the battery module.

### Description of Drawings

Figure 1 is a schematic diagram for explaining a cooling structure of a conventional battery module.
Figure 2 is a schematic diagram showing a battery module related to a first example of the present invention.
Figure 3 is a cross-sectional diagram schematically showing a cooling water inlet part of a battery module related to a first example of the present invention.
Figure 4 is a schematic diagram showing cooling water inlet openings in Part A of Figure 3.
Figure 5 is a diagram for explaining cooling water flow in a battery module related to a first example of the present invention.
Figure 6 is a diagram for explaining cooling water flow in a battery module related to a second example of the present invention.

### Mode for Invention

Hereinafter, a battery module according to one example of the present invention will be described with reference to the accompanying drawings.

In addition, regardless of the reference numerals, the same or corresponding components are given by the same or similar reference numerals, duplicate descriptions thereof will be omitted, and for convenience of explanation, the size and shape of each component member as shown can be exaggerated or reduced.

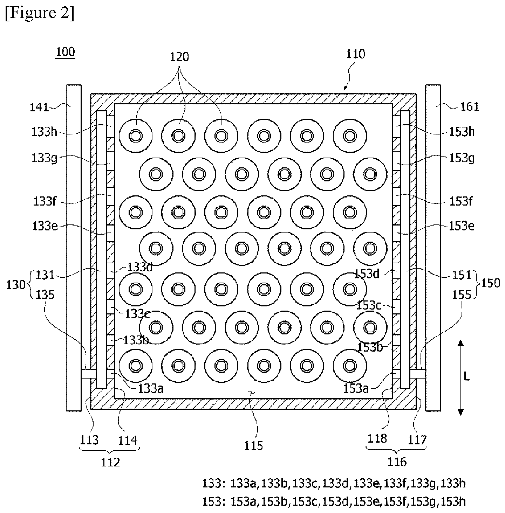

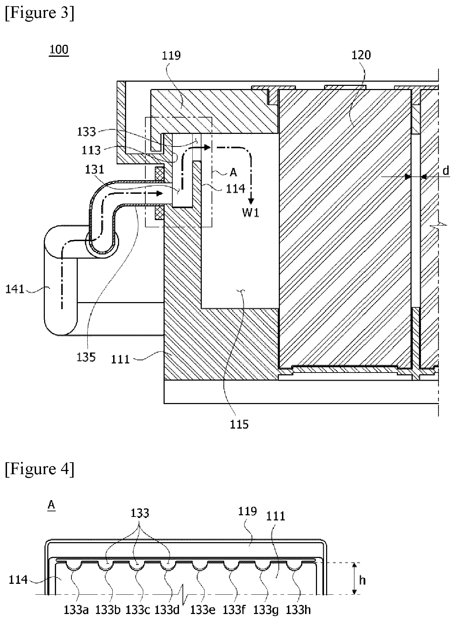

Figure 2 is a schematic diagram showing a battery module (100) related to a first example of the present invention, and Figure 3 is a cross-sectional diagram schematically showing a cooling water inlet part of a battery module (100) related to a first example of the present invention.

As shown in Figure 2, the battery module (100) according to the first example of the present invention comprises a plurality of battery cells (120), a case part (110) in which the plurality of battery cells (120) is accommodated, and a cooling water inlet part (130).

Each battery cell (120) may be a cylindrical battery cell or a rectangular battery cell, and may be a secondary battery capable of charging and discharging.

The case part (110) has an accommodating space (115) in which the plurality of battery cells (120) is accommodated, and a first wall portion (112) and a second wall portion (116) each surrounding the accommodating space (115). As one example, the case part (110) may have a rectangular parallelepiped shape, which has an accommodating space (115) therein. The case part (110) may have a structure in which a plurality of cases is assembled, may have a bottom on which each battery cell (120) is seated, and may have a plurality of wall portions (112, 116) fixed to the bottom. For example, when the case part (110) has the rectangular parallelepiped shape, it may have a bottom and four wall portions, where the first wall portion (112) and the second wall portion (116) may be disposed to face each other. In addition, the case part (110) may be provided so that each battery cell (120) is inserted along the height direction of the first and second wall portions (112, 116).

Also, the cooling water inlet part (130) has an inlet storage portion (131) in which the cooling water (W1) flowing into the first wall portion (112) is accommodated, and is provided so that the cooling water (W1) in the inlet storage portion (131) flows into the accommodating space (115) through the plurality of branch points. In this way, the cooling water inlet part (130) is provided in the first wall portion (112) of the case part (110), which may uniformly supply the cooling water (W1) into the accommodating space (115) through the plurality of branch points, and may supply the cooling water (W1) to the entire region of the accommodating space (115).

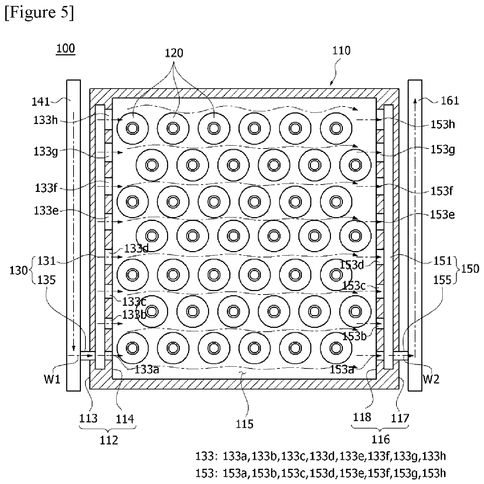

Figure 4 is a schematic diagram showing cooling water inlet openings in Part A of Figure 3, and Figure 5 is a diagram for explaining cooling water flow of a battery module (100) related to a first example of the present invention.

The first wall portion (112) may comprise a first inner wall (114) surrounding the accommodating space (115), and a first outer wall (113) provided to surround the first inner wall (114). The first inner wall (114) and the first outer wall (113) are disposed apart from each other at a predetermined interval, where the inlet storage portion (131) may be provided in the space between them. Also, the first inner wall (114) may form a boundary of the accommodating space (115), and the first outer wall (113) may be disposed to be spaced apart from the accommodating space (115) by the first inner wall (114).

The inlet storage portion (131) may be provided between the first outer wall (113) and the first inner wall (114).

Also, the cooling water inlet part (130) may comprise a plurality of cooling water inlet openings (133) provided on the first inner wall (114) and guiding flow of the cooling water so that the cooling water (W1) stored in the inlet storage portion (131) flows into the accommodating space (115) at the plurality of branch points.

In addition, the cooling water inlet part (130) may comprise a first inlet port (135) provided in the first outer wall (113) and in which the cooling water (W1) flows into the inlet storage portion (131), and a first inlet pipe (141) provided to be connectable to the first inlet port (135) and providing the cooling water (W1) to the first inlet port (135). The first inlet pipe (141) may be detachably mounted on the first inlet port (135).

The plurality of cooling water inlet openings (133) may be located at the upper end of the inlet storage portion (131) so that the cooling water (W1) is stored in the inlet storage portion (131) to a predetermined level, and then flows into the accommodating space (115).

The inlet storage portion (131) may comprise an inlet storage groove provided in the first wall portion (112). At this time, the first inlet port (135) may be connected to the bottom of the inlet storage groove, and the plurality of cooling water inlet openings (133) may be located at the bottom of the inlet storage groove.

In addition, the case part (110) may comprise a lower case (111) including the accommodating space (115), the first wall portion (112) having the inlet storage portion (131), and the second wall portion (116), and an upper case (119) mounted on the lower case (111) to cover the accommodating space (115) and the inlet storage portion (131). The upper case (119) may be provided to cover an outlet storage portion (151) to be described below.

At this time, the plurality of cooling water inlet openings (133) may be located between the upper case (119) and the first inner wall (114).

Also, the lower case (111) may comprise the accommodating space (115) in which the battery cell (120) is accommodated, the first wall portion (112), and the second wall portion (116), where the first wall portion (112) and the second wall portion (116) each surround the accommodating space (115).

In addition, the second wall portion (116) may be provided on the opposite side of the first wall portion (112) of the case part (110). The second wall portion (116) may comprise a second inner wall (118) forming the boundary of the accommodating space (115), and a second outer wall (117) surrounding the second inner wall (118) and disposed apart from the accommodating space (115). The second inner wall (118) and the second outer wall (117) may be disposed apart from each other at a predetermined interval, and an outlet storage portion (151) may be provided in the space between them.

Furthermore, the upper case (119) may be coupled to the lower case (111) to cover the accommodating space, the first wall portion (112), and the second wall portion (116) of the lower case (111).

Specifically, the upper case (119) may be in contact with the first outer wall (113) and the second outer wall (117), respectively. Also, the plurality of cooling water inlet openings (133) may be provided between the upper case (119) and the first inner wall (114). In addition, a plurality of cooling water outlet openings (153) may be provided between the upper case (119) and the second inner wall (118).

Also, the upper case (119) may be provided so that one end (including the terminal portion) of the battery cell (120) is exposed to the outside when it covers the accommodating space (115) and is assembled to the lower case (111). In the battery cell (120), the terminal portion may be electrically connected to a bus bar (not shown) outside the upper case (119). Also, an end case (not shown) may be coupled to the upper case (119) to surround the bus bar. The end case (not shown) may be coupled to the upper case (119) to protect one end of the battery cell (120) and the bus bar (not shown) exposed to the outside of the upper case (119).

Referring to Figure 3, the inlet storage portion (131) may be in the form of a groove located at the upper end of the first wall portion (112) in the lower case (111) and provided between the first outer wall (113) and the first inner wall (114), and the inlet storage portion (131) may be provided in the first wall portion (112) to enable fluid movement with the accommodating space (115).

The inlet storage portion (131) may be provided so that the first inner wall (114) has a height (h) shorter than the height of the first outer wall (113), and may be provided so that the cooling water (W1) flowing through the inlet storage portion (131) overflows the first inner wall (114) to flow into the accommodating space (115).

As one example, the first inlet port (135) may be connected to the bottom of the inlet storage groove, and the plurality of cooling water inlet openings (133) may be located at the top of the inlet storage groove. In this way, after the cooling water (W1) in the inlet storage portion (131) is stored to a predetermined level, it may be supplied to the accommodating space through the plurality of cooling water inlet openings (133). As the cooling water (W1) is stored up to a predetermined level along the longitudinal direction (L) of the inlet storage groove, the cooling water may be uniformly supplied to the entire region of the accommodating space (115) through the plurality of inlet openings (133). Also, the plurality of inlet openings (133) may have the same size.

In addition, each inlet opening (133) may also have a circular, semicircular, or polygonal shape, and the like.

The first inlet port (135) may be provided in the first outer wall (113) to enable fluid movement with the inlet storage portion (131). The first inlet port (135) may be subjected to sealing on the first outer wall (113) of the lower case (111) by a sealing member (not shown). It is for preventing leakage of the cooling water (W1) through the gap between the first inlet port (135) and the first outer wall (113), where an O-ring may be used as the sealing member.

Referring to Figure 3, the first inlet pipe (141) may be detachably mounted on the first inlet port (135). The first inlet pipe (141) is disposed outside the case part (110), that is, outside the battery module (100). The first inlet pipe (141) is a pipe for supplying cooling water (W1) to the first inlet port (135).

Referring to Figure 4, each cooling water inlet opening (133) may also be formed by a groove structure provided at the upper end of the first inner wall (114) in the lower case (111), and the upper case (119).

The plurality of cooling water inlet openings (133: 133a to 133h) performs a function of branching the cooling water (W1) flowing through the inlet storage portion (131) into several forks.

As shown in Figures 2, 4, and 5, the plurality of cooling water inlet openings (133) may be provided to be apart from each other at predetermined intervals along the inlet storage portion (131).

As one example, it may be provided so that the opening size becomes larger as the openings are farther away from the first inlet port (135).

That is, the plurality of cooling water inlet openings (133) is provided along the longitudinal direction (L) of the inlet storage portion (131) so that the opening size becomes larger as the openings are farther away from the first inlet port (135).

When the inlet storage portion (131) has a structure extending along the longitudinal direction, the cooling water (W1) flowing through the inlet storage portion (131) may have a slower flow speed as it is farther away from the first inlet port (135). At this time, the size of the cooling water inlet opening (133) may be made small at the branch point where the flow speed of the cooling water (W1) is high, and the size of the cooling water inlet opening (133) may be made large at the branch point where the flow speed of the cooling water (W1) is low. Accordingly, the cooling water (W1) flowing through the inlet storage portion (131) may be uniformly introduced over the entire region of the accommodating space (115) through the plurality of cooling water inlet openings (133).

For convenience of explanation, depending on the arrangement order of the plurality of cooling water inlet openings (133), the openings are separately represented by drawing reference numerals 133a, 133b, 133c, 133d, 133e, 133f, 133g, 133h in the order close to the first inlet port (135). Accordingly, the plurality of cooling water inlet openings (133) may comprise a 1a inlet opening (133a), a 1b inlet opening (133b), a 1c inlet opening (133c), a 1d inlet opening (133d), and a 1e inlet opening (133e), a 1f inlet opening (133f), a 1g inlet opening (133g), and a 1h inlet opening (133h).

The number of cooling water inlet openings (133) is not limited to that as shown in this specification.

The 1a inlet opening (133a) to 1h inlet openings (133h) may be arranged in a row to be spaced apart from each other along the longitudinal direction (L) of the inlet storage portion (131). The 1a inlet opening (133a) to 1h inlet opening (133h) are each connected to enable fluid movement with the inlet storage portion (131).

In this document, the 1a inlet opening (133a) is the inlet opening closest to the first inlet port (135), and the 1h inlet opening (133h) is the inlet opening located farthest from the first inlet port (135).

The size of the plurality of cooling water inlet openings (133) increases from the 1a inlet opening (133a) to the 1h inlet opening (133h). This is to ensure that the cooling water (W1) flowing along the inlet storage portion (131) is uniformly introduced over the entire region of the accommodating space (115), considering the flow speed of the cooling water (W1).

The case part (110) may comprise a cooling water outlet part (150) provided in the second wall of the case part such that the cooling water (W2) in the accommodating space (115) is discharged from the accommodating space through the plurality of branch points.

The second wall portion (116) may comprise a second inner wall (118) disposed to face the first inner wall (114) of the case part (110) and surrounding the accommodating space, and a second outer wall (117) provided to surround the second inner wall (118).

The cooling water outlet part (150) may be provided in the second wall portion (116) of the lower case (111) so that the cooling water (W2) heat-exchanged with the battery cell (120) in the accommodating space (115) is discharged from the accommodating space (115) through the plurality of branch points.

The cooling water outlet part (150) may be provided in the second wall portion (116) to have the same structure as that of the cooling water inlet part (130). In addition, the second wall portion (116) may be provided in the lower case (111) to face the first wall portion (112) in parallel.

Also, the cooling water outlet part (150) may comprise an outlet storage portion (151), a first outlet port (155), and a plurality of cooling water outlet openings (153).

Specifically, the cooling water outlet part (150) may comprise an outlet storage portion

(151) provided between the second outer wall (117) and the second inner wall (118), and the cooling water outlet part (150) may comprise a plurality of cooling water outlet openings (153) provided in the second inner wall (118) and guiding the flow of the cooling water (W2) so that the cooling water in the accommodating space (115) flows into the outlet storage portion (151) at the plurality of branch points.

Also, the outlet storage portion (151) may be provided so that the height of the second inner wall (118) is shorter than the height of the second outer wall (117). The outlet storage portion (151) is provided so that the heat-exchanged cooling water (W2) flowing through the accommodating space (115) is introduced through the plurality of cooling water outlet openings (153).

The cooling water outlet part (150) may comprise a first outlet port (155) provided in the second outer wall (117) to enable fluid movement with the outlet storage portion (151), and a first outlet pipe (161) provided to be connectable to the first outlet port (155) and through which the cooling water discharged from the first outlet port (155) flows. The first outlet pipe (161) may be detachably mounted on the first outlet port (155).

The first outlet port (155) may be provided in the second outer wall (117) to enable fluid movement with the outlet storage portion (151). The first outlet port (155) may be subjected to sealing to the second outer wall (117) of the lower case (111) by a sealing member. This is for preventing leakage of the cooling water (W1) through the gap between the first outlet port (155) and the second outer wall (117), where an O-ring may be used as the sealing member.

The first outlet pipe (161) may be detachably mounted on the first outlet port (155). The first outlet pipe (161) is a pipe in which the heat-exchanged cooling water (W2) discharged from the first outlet port (155) flows into the outside of the battery module (100).

The plurality of cooling water outlet openings (153) may connect the outlet storage portion (151) and the accommodating space (115) to enable fluid movement, and may be provided in the second inner wall (118) of the second wall portion (116). The plurality of cooling water outlet openings (153) is provided so that the cooling water (W1) in the accommodating space (115) is discharged into the outlet storage portion (151) through the plurality of branch points.

The plurality of cooling water outlet openings (153) is provided along the longitudinal direction (L) of the outlet storage portion (151) so that the opening size becomes larger as the openings are farther away from the first outlet port (155).

That is, the plurality of cooling water outlet openings (153) may be provided apart at predetermined intervals along the outlet storage portion (151), and provided so that the opening size becomes larger as the openings are farther away from the first outlet port (151).

In this document, depending on the arrangement position (order) of the plurality of cooling water outlet openings (153), the openings are separately represented by drawing reference numerals 153a, 153b, 153c, 153d, 153e, 153f, 153g, and 153h. For example, the plurality of cooling water outlet openings (153) may comprise a 2a discharge opening (153a), a 2b discharge opening (153b), a 2c discharge opening (153c), a 2d discharge opening (153d), a 2e discharge opening (153e), a 2f discharge opening (153f), a 2g discharge opening (153g), and a 2h discharge opening (153h).

The number of cooling water outlet openings (153) is not limited to that as shown in this specification.

The 2a outlet opening (153a) to 2h outlet opening (153h) are arranged in a row to be spaced apart from each other along the longitudinal direction (L) of the outlet storage portion (151). The 2a outlet opening (153a) to 2h outlet opening (153h) are each connected to enable fluid movement with the outlet storage portion (151).

The 2a outlet opening (153a) is the outlet opening closest to the first outlet port (155), and the 2h outlet opening (153h) is the outlet opening located farthest from the first outlet port (155).

The size of the plurality of cooling water outlet openings (153) increases from the 2a outlet opening (153a) to the 2h outlet opening (153h). That is, the plurality of cooling water outlet openings (153) is provided so that the size of the outlet opening becomes smaller as it approaches the first outlet port (155). This considers the flow speed of the heat-exchanged cooling water (W2), which is intended to ensure that the heat-exchanged cooling water (W2) is uniformly discharged to the outlet storage portion (151).

Also, the plurality of cooling water outlet openings (153) may be located at the upper end of the outlet storage portion (151) so that the cooling water in the accommodating space (115) is stored to a predetermined level, and then discharged to the outlet storage portion (151).

In addition, the outlet storage portion (151) may comprise an outlet storage groove provided in the second wall portion (116).

The first outlet port (155) may be connected to the bottom of the outlet storage groove, and the plurality of cooling water outlet openings (153) may be located at the top of the outlet storage groove.

As the inlet storage portion (131) is provided in the first wall portion (112) of the case part (110) and the outlet storage portion (151) is provided in the second wall portion (116), the cooling water may be branched into several forks in the first wall portion (112) to flow into the accommodating space (115), and may be discharged from the accommodating space (115) into several forks.

Referring to Figure 5, the cooling water (W1) flows into the accommodating space (115) along the cooling water inlet part (130). Specifically, the cooling water (W1) flows into the inlet storage portion (131) through the first inlet port (135). While the cooling water (W1) flows along the inlet storage portion (131), it is branched into several forks through the respective cooling water inlet openings (133) to flow into the accommodating space (115).

While the cooling water (W1) flows in the accommodating space (115), it is heat-exchanged with the plurality of battery cells (120).

The cooling water (W2) heat-exchanged in the accommodating space (115) is discharged from the accommodating space (115) along the cooling water outlet part (150). Specifically, the heat-exchanged cooling water (W2) flows into the outlet storage portion (151) through each cooling water outlet opening (153). While the heat-exchanged cooling water (W2) flows along the outlet storage portion (151), it is discharged to the outside of the case part (110) through the first outlet port (155).

In this way, the cooling water (W1) may be uniformly introduced and discharged from the inside of the battery module (100) over the entire region of the accommodating space (115).

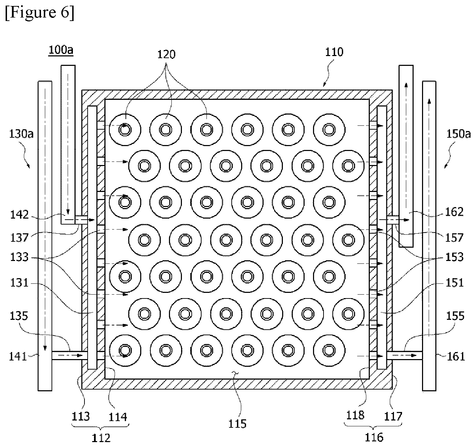

Figure 6 is a diagram for explaining cooling water flow of a battery module related to a second example of the present invention.

Referring to Figure 6, the battery module (100a) according to the second example comprises a case part (110), a cooling water inlet part (130a), and a cooling water outlet part (150a).

The case part (110) according to this example has the same structure as that of the case part (110) of the first example as described above. Specifically, an inlet storage portion (131) provided in a first wall portion (112), a plurality of cooling water inlet openings (133), an outlet storage portion (151) provided in a second wall portion (116), and a plurality of cooling water outlet openings (153) are the same as the above-described first example.

In the second example, the cooling water inlet part (130a) may comprise a second inlet port (137) spaced apart from the first inlet port (135) and provided in the first outer wall (113) to enable fluid movement with the inlet storage portion (131), and a second inlet pipe (142) provided to be connectable to the second inlet port (137) and providing the cooling water to the second inlet port (137).

Also, in the second example, the cooling water outlet part (130b) may comprise a second outlet port (157) spaced apart from the first outlet port (155) and provided in the second outer wall (117) to enable fluid movement with the outlet storage portion (151), and a second outlet pipe (162) provided to be connectable to the second outlet port (157) and through which the cooling water discharged from the second outlet port (157) flows.

However, compared to the cooling water inlet part (130) of the first example as described above, the cooling water inlet part (130a) according to the present example has a difference in that it further comprises the second inlet port (137). The second inlet port (137) is disposed to be spaced apart from the inlet port (135) in the longitudinal direction of the inlet storage portion (131). The second inlet pipe (142) may be detachably coupled to the second inlet port (137).

Also, in the case where the second inlet port (137) is further provided, when the battery module has a large size, the inlet storage portion (131) is divided into a plurality of regions (e.g., two regions), whereby it is possible to facilitate the inflow of the cooling water (W1) to the corresponding region. At this time, the plurality of cooling water inlet openings (133) may also be provided to have the same size.

Compared to the cooling water outlet part (150) of the first example as described above, the cooling water outlet part (150a) according to the present example further comprises the second outlet port (157).

The second outlet port (157) is disposed to be spaced apart from the outlet port (155) in the longitudinal direction of the outlet storage portion (151). The second outlet pipe (162) may be detachably coupled to the second outlet port (157).

In the case where the second outlet port (157) is further provided, when the battery module has a large size, the accommodation outlet storage portion (151) is divided into at least two regions, whereby it is possible to facilitate discharge of the heat-exchanged cooling water (W2).

In the second example, the flows of the cooling water (W1) and the heat-exchanged cooling water (W2) are as follows.

The cooling water (W1) flows into the inlet storage portion (131) through the first inlet port (135) and the second inlet port (137), respectively. While the cooling water (W1) flows along the inlet storage portion (131), it is branched into several forks through each cooling water inlet opening (133), thereby flowing into the accommodating space (115).

Also, while the cooling water (W1) flows through the accommodating space (115), it is heat-exchanged with the battery cell (120).

The heat-exchanged cooling water (W2) flows into the outlet storage portion (151) through each cooling water outlet opening (153). While the heat-exchanged cooling water (W2) flows along the outlet storage portion (151), it is discharged from the case part (110) through the first outlet port (155) and the second outlet port (157).

The preferred examples of the present invention as described above have been disclosed for illustrative purposes, and those skilled in the art having ordinary knowledge of the present invention will be able to make various modifications, changes, and additions within the spirit and scope of the present invention, and such modifications, changes, and additions should be regarded as falling within the scope of the following claims.

### Industrial Applicability

According to the battery module related to one example of the present invention, the cooling water can be spread uniformly, and the branched cooling channels for cooling water can be provided in the battery module itself.

## Claims

1. A battery module comprising:
a battery cell;
a case part having an accommodating space, in which the battery cell is accommodated, and a first wall portion and a second wall portion each surrounding the accommodating space; and
a cooling water inlet part having an inlet storage portion, in which cooling water flowing into the first wall portion is accommodated, and provided so that the cooling water in the inlet storage portion flows into the accommodating space through a plurality of branch points.

2. The battery module according to claim 1, wherein
the first wall portion comprises a first inner wall surrounding the accommodating space, and a first outer wall provided to surround the first inner wall,
the inlet storage portion is provided between the first outer wall and the first inner wall, and
the cooling water inlet part comprises a plurality of cooling water inlet openings provided in the first inner wall and guiding the flow of the cooling water so that the cooling water stored in the inlet storage portion flows into the accommodating space at the plurality of branch points.

3. The battery module according to claim 2, wherein
the cooling water inlet part further comprises a first inlet port provided in the first outer wall and in which the cooling water flows into the inlet storage portion, and a first inlet pipe the first inlet port provided to be connectable to the first inlet port and providing the cooling water to the first inlet port.

4. The battery module according to claim 3, wherein
the plurality of cooling water inlet openings is provided apart at predetermined intervals along the inlet storage portion, and provided so that the opening size becomes larger as the openings are farther away from the first inlet port.

5. The battery module according to claim 2, wherein
the plurality of cooling water inlet openings is located at the upper end of the inlet storage portion so that in the inlet storage portion, the cooling water is stored to a predetermined level, and then flows into the accommodating space.

6. The battery module according to claim 3, wherein
the inlet storage portion comprises an inlet storage groove provided in the first wall portion,
the first inlet port is connected to the bottom of the inlet storage groove, and the plurality of cooling water inlet openings is located at the top of the inlet storage groove.

7. The battery module according to claim 2, wherein
the case part comprises a lower case including the accommodating space, and the first wall portion having the inlet storage portion, and an upper case mounted on the lower case to cover the accommodating space and the inlet storage portion, and
the plurality of cooling water inlet openings is located between the upper case and the first inner wall.

8. The battery module according to claim 3, wherein
the cooling water inlet part further comprises a second inlet port spaced apart from the first inlet port and provided in the first outer wall to enable fluid movement with the inlet storage portion, and a second inlet pipe provided to be connectable to the second inlet port and providing the cooling water to the second inlet port.

9. The battery module according to claim 2, wherein
the case part further comprises a cooling water outlet part provided in the second wall portion of the case part such that the cooling water in the accommodating space is discharged from the accommodating space through the plurality of branch points, and
the second wall portion comprises a second inner wall disposed to face the first inner wall of the case part and surrounding the accommodating space, and a second outer wall provided to surround the second inner wall.

10. The battery module according to claim 9, wherein
the cooling water outlet part comprises an outlet storage portion provided between the second outer wall and the second inner wall, and a plurality of cooling water outlet openings provided in the second inner wall and guiding the flow of the cooling water so that the cooling water in the accommodating space flows into the outlet storage portion at the plurality of branch points.

11. The battery module according to claim 10, wherein
the cooling water outlet part further comprises a first outlet port provided in the second outer wall to enable fluid movement with the outlet storage portion, and a first outlet pipe provided to be connectable to the first outlet port and through which the cooling water discharged from the first outlet port flows.

12. The battery module according to claim 10, wherein
the plurality of cooling water outlet openings is provided apart at predetermined intervals along the outlet storage portion, and provided so that the opening size becomes larger as the openings are farther away from the first outlet port.

13. The battery module according to claim 10, wherein
the plurality of cooling water outlet openings is located at the upper end of the outlet storage portion so that the cooling water in the accommodating space is stored to a predetermined level, and then discharged to the outlet storage portion.

14. The battery module according to claim 11, wherein
the outlet storage portion comprises an outlet storage groove provided in the second wall portion,
the first outlet port is connected to the bottom of the outlet storage groove, and the plurality of cooling water outlet openings is located at the top of the outlet storage groove.

15. The battery module according to claim 11, wherein
the cooling water outlet part further comprises a second outlet port spaced apart from the first outlet port and provided in the second outer wall to enable fluid movement with the outlet storage portion, and a second outlet pipe provided to be connectable to the second outlet port and through which the cooling water discharged from the second outlet port flows.
